# EUROPÄISCHE PATENTSCHRIFT

(11) **EP 3 002 234 B1**
(45) Veröffentlichungstag und Bekanntmachung des Hinweises auf die Patenterteilung: **12.10.2016**
(21) Anmeldenummer: 15185877.6
(22) Anmeldetag: 18.09.2015
(51) Int. Cl.: B65G 19/02, B65G 35/06

(54) **WERKSTÜCKTRÄGER**
WORKPIECE HOLDER
PORTE-PIECE

(30) Priorität: 30.09.2014 DE 102014014133
(43) Veröffentlichungstag der Anmeldung: 06.04.2016
(73) Patentinhaber: Liebherr-Verzahntechnik GmbH, 87437 Kempten (DE)
(72) Erfinder: Lingenhöl, Klaus, 87437 Kempten (DE); Landerer, Roman, 87477 Sulzberg (DE); Heuberger, Michael, 87477 Sulzberg (DE)
(74) Vertreter: Laufhütte, Dieter

(56) Entgegenhaltungen:
- EP-A2- 1 484 267
- DE-A1- 10 147 026

## Beschreibung

Die Erfindung betrifft einen Werkstückträger für eine Werkstückfördereinrichtung zum Transport von vorzugsweise schweren Werkstücken.

Zum Fördern von Werkstücken mittels Werkstückträger gibt es prinzipiell zwei verschiedene Systeme. Bei einem System sind die Werkstückträger in festen Abständen mit dem Förderband verbunden. Das Förderband wird getaktet weiterbewegt und verfährt so die Werkstückträger von einer Position zu nächsten. Nachteilig daran ist es, dass sich die Taktung am zeitlich längsten andauernden Prozess orientieren muss und dass keine Ein- oder Ausschleusung von Werkstückträgern erfolgen kann.

Beim anderen System läuft die Förderkette kontinuierlich und die Werkstückträger werden mittels Reibschluss von der Förderkette mitgenommen bzw. vor Bearbeitungsstellen werden die Werkstückträger durch externe Stopps und Vereinzeler angehalten. Über Weichen und Ein- und Ausschleuseinrichtungen können die Werkstückträger in Nebenspuren umgeleitet werden.

Vor einer Bearbeitungs- oder Übergabestelle stauen sich in bestimmten Situationen die Werkstückträger auf. Dabei entstehen durch die auf die Kette wirkenden Reibkräfte hohe Belastungen für die Kette, die bei deren Auslegung berücksichtigt werden muss. Außerdem entsteht durch die ständige Reibung ein deutlicher Verschleiß an der Kette und den Mitnehmern der Werkstückträger. Um den Verschleiß zu minimieren und um die Kette nur so groß wie unbedingt notwendig auszulegen, wird versucht, die Reibkraft so klein wie möglich zu halten. Hierzu gibt es gerade bei schweren Werkstücken verschiedene Ansätze.

Eine Werkstückfördereinrichtung für schwere Werkstücke mit einer Mehrzahl an Werkstückträgern ist aus der EP 0 203 898 bekannt. Die Werkstückträger bestehen dabei aus einem Werkstückträger zur Aufnahme der Werkstücke und jeweils einem drehbaren vorderen und hinteren Führungssegment, welches mittels Gleitschuh eine Verbindung mit dem darunter angeordneten Band herstellt. Mittels der Reibkraft werden die Werkstückträger vom Band mitgenommen. Die Einstellung der Anpresskraft für den Gleitschuh erfolgt durch die Wahl einer geeigneten Feder bzw. in dem zusätzlich oder alternativ durch unterlegen geeigneter Scheiben die Vorspannkraft der Feder entsprechend eingestellt wird. Bei dieser Ausführung wird die Anpresskraft einmalig ausgelegt und eingestellt und kann nicht variabel an die aktuellen Anforderungen angepasst werden.

Die DE 201 21 809 U1 beschreibt einen kurvengängigen, niedrig bauenden Stauförderer mit einem Transportwagen. In der Mitte des Transportwagens ist an der Unterseite ein einstellbarer Mitnehmer angeordnet, der in seinem Inneren ein von einer Feder nach unten gedrücktes Reibelement aufnimmt, das gegen die Oberfläche des Palettenbandförderers gepresst wird und so den Transportwagen mitnimmt. Die Anpresskraft wird mittels einer Druckfeder, die auf das Reibelement wirkt, aufgebracht. Deren Anpressdruck ist über eine Schraube einstellbar. Der Anpressdruck wird so eingestellt, dass die Reibung jeweils ausreicht, um den Transportwagen mitsamt der aufliegenden Last mit Hilfe des Reibschlusses zwischen Reibelement und Palettenbandförderer vorwärts zu bewegen. Der Transportwagen selbst rollt dabei mit vier einzelnen Lenkrollen auf dem Transportband ab.

Nachteilig an dieser Ausführungsform ist es, dass jeder einzelne Mitnehmer eines Transportwagens individuell eingestellt werden muss. Da es keine Anzeige der eingestellten Kraft gibt, ist dies ein sehr zeitaufwändiger Prozess. Ob die Anpresskraft zur Mitnahme ausreichend ist, muss an jedem Transportwagen individuell durch Versuche geprüft werden. Der Anwender wird daher geneigt sein, auf jeden Fall sicherzustellen, dass die Anpresskraft ausreicht. Von daher besteht dabei die Gefahr, dass sicherheitshalber mit zu hohen Anpresskräften gearbeitet wird, um auf jeden Fall eine sichere Mitnahme zu gewährleisten. Diese geht dann aber zu Lasten des Verschleißes der Kette und der Werkstückträgermitnehmer. Wird der Stauförderer häufiger umgerüstet und werden unterschiedlich Werkstücke und damit unterschiedlich schwere Transportwagen genutzt, erfordert dies jeweils einen zeitlich ziemlich aufwändigen Umrüstprozess.

EP 1 484 267 A2 beschreibt ein werkstüchträger nach dem Oberbegriff von Anspruch 1.

Aufgabe der vorliegenden Erfindung ist es daher, einen Einstellmechanismus für die Anpresskraft zwischen Mitnehmern und Band bereitzustellen, mit dem auf einfache Art und Weise eine leichte Anpassung an unterschiedliche Werkstückgewichte für eine Mehrzahl an Werkstückträgern erfolgen kann und mit dem ein einmalig festgelegter Wert reproduzierbar wieder eingestellt werden kann - z. B. im Falle eines Werkstückwechsels.

Ist dieser Einstellwert nämlich einmalig ermittelt, so kann er für bestimmt Werkstück/Werkstückträgerkombinationen auch abgespeichert oder beispielsweise auf dem Werkstückträger notiert werden und steht so beim nächsten Umrüstvorgang als vorgegebener Einstellwert wieder zur Verfügung. Sollten nach einiger Zeit die Werkstückträger und die Kette einen gewissen Verschleiß aufweisen, können die Einstellwerte gezielt korrigiert werden, ohne dass es aufwändiger Versuche und Nachstellarbeiten an jedem einzelnen Werkstückträger bedarf.

Diese Aufgabe wird durch eine Einstelleinrichtung für die Anpresskraft gemäß den Merkmalen des Anspruchs 1 und durch das Verfahren nach Anspruch 7 gelöst.

Weitere vorteilhafte Ausführungsformen sind Gegenstand der sich an den Hauptanspruch anschließenden abhängigen Ansprüche.

Werkstücktransporteiririchtungen, wie sie der Erfindung zu Grunde liegen, sind Transporteinrichtungen bei denen der Werkstückträger mittels Reibkraft von einer Transportkette mitgenommen werden. Die Transportkette läuft dabei häufig in einer U-förmigen Aussparung in der Mitte eines Bandgrundkörpers, angetrieben durch einen oder mehrere Elektromotore. Die Werkstückträger weisen üblicherweise zwei Führungsfüße auf, die in der U-förmigen Aussparung auf der Kette aufstehen, so dass die Transportkette die Werkstückträger mittels Reibkraft mitnehmen kann. Auf den Werkstückträgern sind Werkstückaufnahmen montiert die üblicherweise individuell für die zu transportierenden Werkstücke ausgelegt sind. Zusätzlich werden die Werkstückträger, ebenso wie die Kette, seitlich in der Aussparung geführt.

Vor einer Bearbeitungsstation werden einer oder mehrere Werkstückträger aufgestaut, in dem durch einen Stopp und oder Vereinzler einer der Führungsfüße des vordersten Werkstückträgers an seiner Vorwärtsbewegung, durch einen einschwenkbaren Anschlag, gehindert wird. Das Band läuft dabei kontinuierlich unter den Werkstückträger hindurch weiter. Wird der Stopp oder der Vereinzier wieder geöffnet, nimmt die Transportkette die aufgestauten Werkstückträger wieder mit bis der Stopp oder der Vereinzler wieder geschlossen wird.

Dadurch dass die Werkstückträger lose auf dem Band aufliegen, können sie, falls erforderlich, an Ein- und Ausschleusstellen aus dem direkten Teilfluss ausgeschleust und zu separaten Bearbeitungsstationen transportiert werden. An den Bearbeitungsstation können die Werkstückträger mitsamt der darauf angeordneten Werkstücke, zur Übergabe der Werkstücke an eine Bearbeitungseinrichtung durch eine separate Hubstation angehoben werden, so dass das Werkstück von der Werkstückaufnahme abgehoben und bearbeitet werden kann. Im Anschluss an die Bearbeitung kann das Werkstück wieder auf diese Werkstückaufnahme abgelegt werden. Je nach der Prozessabfolge kann das Werkstück aber auch auf einen später ankommenden leeren Werkstückträger abgelegt werden.

Bei schweren Werkstücken wird versucht das Transportsystem für die Werkstücke so auszulegen, das wesentliche Anteile des Werkstückgewichts über zusätzliche Rollen an den Werkstückträgern aufgenommen werden. Diese Rollen laufen auf dem Bandgrundkörper oder auf speziellen Laufschienen neben den Bandgrundkörper.

Anders als bei kleinen Werkstücken, bei denen das komplette Gewicht von Werkstück und Werkstückträgern auf der Kette lastet, bietet sich bei der erfindungsgemäßen Ausführungsform die Möglichkeit durch die Aufteilung der Kräfte das Transportband / die Transportkette kleiner zu dimensionieren, denn sie muss nur noch die Kraft zur Überwindung der Rollreibung aufbringen die notwendig ist, um die Werkstückträger entlang der Förderstrecke auf Laufrollen zu bewegen. Zusätzlich kann die Anpresskraft die auf die Kette einwirkt, und die notwendig ist damit die Werkstückträger von der Kette mitgenommen werden, einstellbar ausgeführt sein.

Um diese Anpresskraft einstellbar auf das Band aufzubringen, gibt es verschiedene Möglichkeiten. Die einfachste davon ist sicher die mittels einer Feder, deren Federweg mittels mechanischer Elemente variable veränderbar ist. Bei der erfindungsgemäßen Ausführung kommt zu der Einstelleinrichtung nun noch eine Anzeigeeinrichtung hinzu mittels derer ein Kennwert für die eingestellte Federkraft visualisiert werden kann. Dies kann eine Anzeige sein, welche beispielsweise die lineare Verstellung des Federraums abbildet, könnte aber auch eine Druckanzeige sein, die die tatsächliche Anpresskraft anzeigt. Wichtig ist vor allem, dass die Anzeige reproduzierbare Kennwerte für die eingestellte Anpresskraft liefert, damit beispielsweise an einem Werkstückträger die erforderliche Kraft zur Mitnahme des Werkstückträgers ermittelt werden kann. Diese wird dann durch Übernahme der eingestellten und ermittelten Kennwerte auf die anderen Werkstückträger an der Transporteinrichtung übertragen.

Ist nach einer bestimmten Nutzungszeit der Einrichtung ein bestimmter Verschleiß an der Kette und den Mitnehmern erreicht, kann die Anpresskraft relativ einfach nachjustiert werden, indem an einem Werkstückträger der neue Einstellwert ermittelt wird und dieser anschließend ebenso einfach auf die anderen Werkstückträger übertragen werden kann.

Werden unterschiedliche Werkstücktypen durch ein und dieselbe Transporteinrichtung gefördert, können die Werkstückträger auch auf unterschiedliche Anpresskräfte eingestellt werden. Der Anwender hat dann durch die Visualisierung der eingestellten Werte auch die Möglichkeit sofort zu überprüfen, ob für den aktuellen Werkstücktyp auch die richtigen Werte eingestellt sind.

Dies könnte, falls erforderlich sogar über eine externe Kontrolleinrichtung erfolgen, vor allem dann, wenn die Werkstückträger mit einer individuellen Kennzeichnung oder einer Werkstückträger-Identifikationseinrichtung wie beispielsweise einer RFID oder einem Datenträger ausgerüstet sind. Hierzu wäre eine optische Auswertung der Anzeige erforderlich oder aber eine elektronische Datenübertragung der eingestellten Werte. Dies wäre vor allem dann interessant wenn die Transporteinrichtung über große Strecken innerhalb einer Werksautomation zur Verkettung einer Vielzahl von Maschinen, verläuft. Für eine einfache Maschinenautomation ist eine einfache Visualisierung sicherlich ausreichend.

In einer weiteren Ausführungsform der Erfindung wird die Anzeigeeinrichtung durch eine Schutzabdeckung vor unbeabsichtigter Verstellung geschützt. Damit kann verhindert werden, das die Anpresskraft ungewollt beim Handling der Werkstückträger oder der Werkstücke auf den und mit den Trägern verstellt wird. Weiterhin wird die Einstellvorrichtung und insbesondere deren Anzeigeeinrichtung vor Beschädigungen geschützt.

Weiter wäre es möglich die Schutzabdeckung so auszuführen, das diese zusätzlich noch ein ungewolltes Verstellen der Anpresskraft verhindert, indem die Abdeckung eine Blockade der Verstellbewegung in einer bestimmten Position erzielt. Dies könnte durch eine mechanische Blockadevorrichtung, die in oder an eine oder mehrere Aussparung oder Flächen an der Einstelleinrichtung eingreift, erreicht werden. Weiterhin wäre eine Klemmfunktion, die die Schutzeinrichtung auf die Einstelleinrichtung ausübt, möglich.

Zum Verstellen der Einstelleinrichtung kann die Schutzeinrichtung durch Abheben, Verkippen, Verschieben oder Verdrehen die Einstelleinrichtung freigeben, so dass sie verstellt werden kann. Nach dem Einstellvorgang kann dann durch eine umgekehrt Bewegung die Einstelleinrichtung wieder blockiert werden.

Weitere Merkmale, Einzelheiten und Vorteile der Erfindung werden im Folgenden anhand mehrerer Zeichnungen näher erläutert. Es zeigen:
- Fig. 1:: eine Seitenansicht einer erfindungsgemäßen Fördervorrichtung mit mehreren Werkstückträgern,
- Fig. 2:: eine perspektivische Ansicht auf mehrere erfindungsgemäße Werkstückträger,
- Fig. 3:: einen Schnitt durch einen Werkstückträger im Bereich des Mitnehmers,
- Fig. 4: eine Detailansicht eines Werkstückträgers mit der Verstelleinrichtung und einer Schutzabdeckung.
- Fig. 5: eine Detailansicht eines Werkstückträgers mit einer Einstell- und Anzeigeeinrichtung

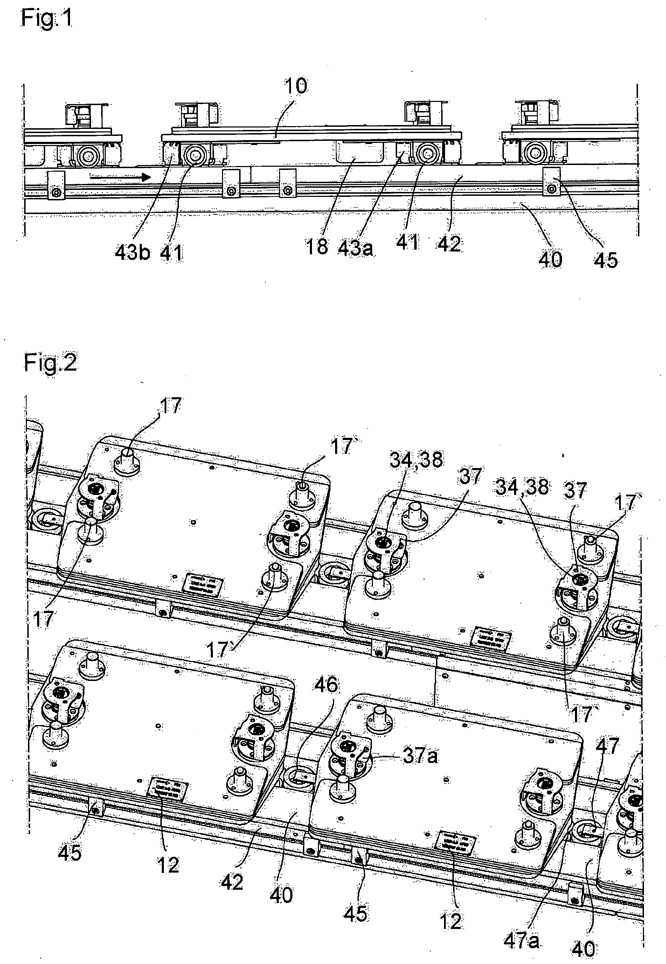

**Figur 1** zeigt eine Seitenansicht einer Fördervorrichtung mit mehreren Werkstückträgern, die hintereinander auf eine Staustrecke anstehen. Die Werkstückträger 10 mit dem vorderen und hinteren Laufwagen 43a, 43b laufen mit ihren Rollen 41 auf Laufschienen 42, die seitlich an einem Bandgrundkörper 40 montiert sind. Die Laufwagen 43 sind dabei als Schwenkachse ähnlich einer Drehschemellenkung ausgeführt und in der Mitte im Bandgrundkörper geführt. Die Laufschienen, die im Wesentlichen das Werkstückgewicht aufnehmen, sind über Klemmstücke 45 mit dem Bandgrundkörper 40 verbunden und können so bei auftretendem Verschleiß einfach ausgetauscht werden.

Mit der am Laufwagen angebrachten Identifikationseinrichtung 18 können die Werkstückträger über eine dafür geeignete Identifikationseinrichtung erkannt werden und abhängig von den gespeicherten Informationen können bestimmte Operationen an verschiedenen Stellen der Fördereinrichtung ausgelöst werden. Die Identifikation kann dabei beispielsweise optisch über gewisse Codes z.B. Datamatrixcode, Barcode etc. oder durch Auslesen von gespeicherten Informationen aus Speichern wie RFID, Transponder, etc. erfolgen. Damit ist auch eine chaotische Fertigung mit verschiedenen Werkstücktypen auf einer Förderstrecke möglich.

In der perspektivischen Ansicht der Förderstrecke in **Figur 2** sind weitere Merkmale der erfindungsgemäßen Einrichtung dargestellt. Mit der Einstelleinrichtung 38 für die Anpresskraft mit integrierter Anzeige 34 kann die Anpresskraft, mit der die Mitnehmer gegen das Band gepresst werden, individuell eingestellt und auch sehr einfach überprüft werden. Damit sich die eingestellte Anpresskraft nicht verstellt, ist in die Schutzabdeckung 37 eine Verstellsicherung 37a integriert. Die Werkstücke die mittels dieser Werkstückträger befördert werden, können mittels einfacher Werkstückaufnahmepins 17, 17' oder auch über aufwändige und damit schwerere Spezialwerkstückaufnahmen von den Werkstückträgern aufgenommen werden. Diese Werkstückaufnahmen beeinflussen das jeweilige Gewicht der Werkstückträger und müssen bei der Einstellung der Reibkraft mit berücksichtigt werden. Bei leeren Werkstückträgern fahren diese ausschließlich mit den Mitnehmern auf dem Kettenband und nicht mit den Rollen 41 auf den seitlichen Laufschienen 42, um den Verschleiß zu verringern. Damit aber muss die Anpresskraft individuell an das Gewicht der Werkstückträger angepasst werden, was wiederum eine leichte und schnelle Einstellmöglichkeit erfordert. Werden verschiedene Werkstücktypen auf einem Band in chaotischer Reihenfolge gefördert, muss jeder Werkstückträger individuell eingestellt werden bzw. die eingestellte Anpresskraft muss leicht überprüft werden können. Dabei kann eine individuelle Kennzeichnung 12 der einzelnen Werkstückträger hilfreich sein.

Der Abstand der Werkstückträger zueinander wird über Abstandstücke 47, 47a eingehalten. Dazwischen ist ein ringförmiger Puffer 46 aus elastischem Material montiert, der sich beim Aufstauen mehrere Werkstückträger hintereinander so verformt, das er sich an den seitlichen Wänden der Kettenführung anlegt und so den Staudruck, bedingt durch den Werkstückträgerstau, wenigstens teilweise auf die seitlichen Führungswände überträgt. Damit lastet nicht der gesamte Staudruck der aufgestauten Werkstückträger auf dem Stopp oder Vereinzler der Ursache für den Werkstückträgerstau ist. Weiterhin wirkt der elastische Ring als Stoßdämpfer für die auflaufenden Werkstückträger. Damit wird der Stoß abgemildert, der andernfalls durch die auf das Stauende auffahrende Werkstückträger verursacht würde.

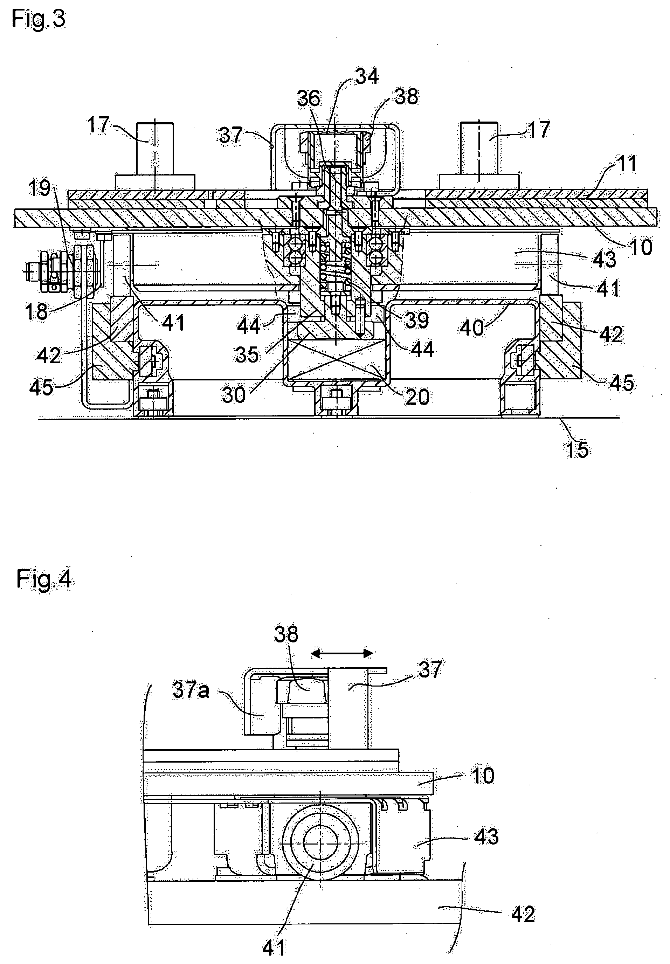

Die **Figur 3** zeigt einen Schnitt durch einen Laufwagen 43 eines erfindungsmäßen Werkstückträgers im Bereich des Mitnehmers 35. Seitlich in dem Bandgrundkörper 40 werden die Laufwagen 43 mit den Führungsrollen 44 in der U-förmigen Aussparung geführt in der ebenfalls das Band 20 läuft. Über seitlich angebrachte Klemmstücke 45 sind die Laufleisten 42 am Bandgrundkörper montiert. Auf diesen laufen die Laufwagen 43 mit ihren Laufrollen 41 und stützen so im Wesentlichen das Werkstückgewicht auf dem Bandgrundkörper ab. Das Band 20 wird nur mit der Anpresskraft belastet über die mittels der Mitnehmer die Werkstückträger transportiert werden.

Über eine Feder 39 wird das im Mitnehmer 35 geführte Fußteil 30 gegen das Band 20 gepresst und nimmt über die Reibung die Werkstücktransporteinrichtung in Bandförderrichtung mit. Der Anpressdruck der Feder 39 wird über die Einstellvorrichtung 38 mit Anzeige 34 mit Hilfe des Stößels 36 aufgebracht. Durch vertikale Verstellung des Stößels 36 nach unten wird der Einbauraum der Feder eingeschränkt und so wir die Anpresskraft erhöht. Gleichzeitig ändert sich durch die Verdrehung der Einstellvorrichtung die oben im Deckel der Einstellvorrichtung angebrachte Anzeige 34 und liefert so einen Referenzwert für die eingestellte Anpresskraft. Dieser Wert kann auf die weiteren Mitnehmer übertragen werden, indem bei diesen die Einstellvorrichtung so lange verdreht wird, bis ebenfalls dieser Wert erreicht ist. Damit ist bei diesen Mitnehmern die gleiche Anpresskraft eingestellt. Die Art und Weise wie diese Kraft eingestellt wird, hängt aber vom mechanischen Aufbau der Einstellvorrichtung 38 ab. Genauso gut könnt hier ein hydraulischer Kolben verschoben werden und so die Anpresskraft der Feder erhöhen. Als Referenzwert könnte in diesem Fall der Hydraulikdruck im Einstellsystem herangezogen werden.

Seitlich am Bandgrundkörper 40 ist hier noch die Leseeinheit 19 zur Auswertung der Daten der (Werkstückträger)-Identifikationseinrichtung 18 erkennbar. Auf den Werkstückträgern werden die Werkstückauflagen 11, in diesem Fall in einer Ausführung als Aufnahmepins 17 ausgeführt, montiert.

In **Figur 4** zeigt noch einmal eine Detailansicht eines Laufwagens eines Werkstückträgers. Hier ist ein Ausführungsbeispiel für eine Verstellsicherung 37a, welche in die Schutzabdeckung 37 für die Einstellvorrichtung 38 für den Anpressdruck integriert ist, dargestellt. Die in Pfeilrichtung verschiebliche Schutzabdeckung greift seitlich in Aussparungen an Verdrehknopf der Einstelleinrichtung 38 und verhindert so eine ungewollte Verstellung des Anpressdrucks. Die Ausführung der Verstellsicherung hängt aber stark davon ab, wie der Anpressdruck eingestellt (verdrehen, verschieben, etc.) wird und ist hier nur exemplarisch dargestellt.

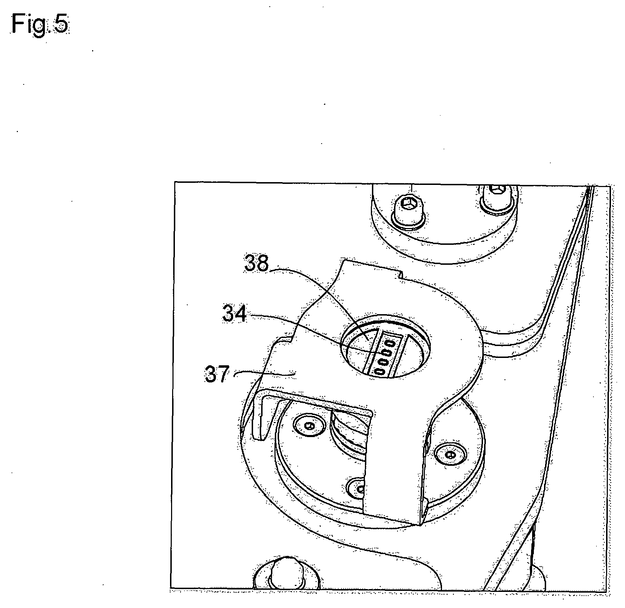

In **Figur 5** wird in der Detailansicht eines Werkstückträgers noch einmal besonders die Anzeigevorrichtung 34 dargestellt - hier als digitale Anzeige eines Zahlenwertes.

## Patentansprüche

1. Werkstückträger (10) für eine Werkstückfördereinrichtung zum Transport von insbesondere schweren Werkstücken mit einer Förderkette zum Fördern der Werkstückträger durch Übertragung von Reibkräften und mit einer Führungsbahn zum Führen und Abstützen der Förderkette und der Werkstückträger, wobei die Förderkette in einer U-förmigen Führungsbahn verläuft, wobei sich neben der U-förmigen Führungsbahn Abstützflächen erstrecken, auf denen sich die Werkstückträger mit Führungsrollen abstützen wobei die Werkstückträger (10) mit einem vorderen und einem hinteren Laufwagen (43a,43b) ausgestattet sind, die mit einem Mitnehmer (35) zum Eingriff in die U-förmige Aussparung versehen sind, und wobei die Mitnehmer (35) über ein Fußteil (30) mit einstellbarer Anpresskraft zur Überwindung der Gleitreibung ausgeführt sind, **dadurch gekennzeichnet,**
**dass** der einstellbare Mitnehmer (35) mit Fußteil (30) über eine Anzeige (34) zur Visualisierung der eingestellten Anpresskraft verfügt.

2. werkstückträger (10) für eine Werkstückfördereinrichtung nach Anspruch 1, **dadurch gekennzeichnet, dass** die Anzeigeeinrichtung (34) für die Anpresskraft im Mitnehmer (35) einen Wert für einen eingestellten Weg, eine eingestellte Kraft oder einen eingestellten Druck anzeigt.

3. Werkstückträger (10) für eine Werkstückfördereinrichtung nach Anspruch 1 oder 2, **dadurch gekennzeichnet, dass** die Einstelleinrichtune (38), zur Einstellung der Anpresskraft für den Mitnehmer (35), mit einer Schutzabdeckung (37) ausgestattet ist, die ein unbeabsichtigtes Verstellen der Anpresskraft verhindert und die Einstelleinrichtung (38) vor Beschädigungen schützt.

4. Werkstückträger (10) für eine Werkstückfördereinrichtung nach Anspruch 1 bis 3, **dadurch gekennzeichnet, dass** die Einstelleinrichtung (38) zur Einstellung der Anpresskraft für den Mitnehmer (35) mit einer Schutzabdeckung (37) ausgestattet ist und das in die Schutzabdeckung (37) eine Blockade- und/oder Klemmvorrichtung integriert ist, die ein ungewolltes verstellen der Anpresskraft verhindert.

5. Werkstückträger (10) für eine Werkstückfördereinrichtung nach Anspruch 3 oder 4, **dadurch gekennzeichnet, dass** die Einstelleinrichtung (38), zur Einstellung der Anpresskraft für den Mitnehmer (35), mit einer Schutzabdeckung (37) und mit einem Schnellwechsel ausgestattet ist, der ein werkzeugloses Entfernen, Verschieben, Verdrehen oder Verkippen der Schutzeinrichtung zulässt, so dass die Einstelleinrichtung (38) zeitsparend auf einen neuen Wert einstellbar ist.

6. Werkstückträger (10) für eine Werkstückfördereinrichtung nach einem der vorhergehenden Ansprüche, **dadurch gekennzeichnet, dass** die Werkstückträger (10) mit einer Werkstückträger-Identifikationseinrichtung (18) ausgerüstet sind, mit der die Träger (10) eindeutig identifizierbar sind, wodurch es möglich ist, dass Werkstückträger (10) mit unterschiedlichen Werkstücktypen und unterschiedlicher Mitnehmer-Anpresskraft auf einer Werkstückfördereinrichtung gemeinsam gefördert werden können.

7. Verfahren zur Einstellung einer Vielzahl von Werkstückträgern (10) nach einem der vorhergehenden Ansprüche für eine Werkstückfördereinrichtung, **dadurch gekennzeichnet, dass** die an einem Werkstückträger (10) ermittelte Anpresskraft einfach auf die anderen Werkstückträger (10) übertragen werden kann, indem der von der Anzeiger (34) abgelesene Wert auch bei den anderen Werkstückträgern eingestellt wird, oder die Anpresskraft einfach dadurch eingestellt werden kann, das die Einstelleinrichtung (38) so lange betätigt wird, bis der Wert der Anzeige (34) einem vorgegebenen Wert entspricht, oder die eingestellte Anpresskraft einfach durch eine visuelle Prüfung der Anzeige (34) auf ihre Richtigkeit überprüft werden kann, oder die Anpresskraft bei verschleißbedingter Reduzierung der Reibmitnahmekraft einfach dadurch eingestellt werden kann, das die Einstelleinrichtung (38) bei allen Werkstückträgern (10) um einen vordefinierten Wert korrigiert wird.

8. Werkstückfördereinrichtung mit mindestens einem Werkstückträger nach einem der vorhergehenden Ansprüche, **dadurch gekennzeichnet**, das Werkstückträger (10) mit unterschiedlich eingestellter Anpresskraft zur Förderung unterschiedlicher Werkstücktypen auf einer Werkstückfördereinrichtung eingesetzt werden.

## Claims

1. A workpiece carrier (10) for a workpiece conveying device for the transportation of workpieces, in particular heavy workpieces, having a conveyor chain for conveying the workpiece carriers by transmitting friction forces and having a guide track for guiding and supporting the conveyor chain and the workpiece carriers, wherein the conveyor chain runs in a U-shaped guide track, wherein support surfaces extend next to the U-shaped guide track and the workpiece carriers are supported with guide rollers on said support surfaces, wherein the workpiece carriers (10) are equipped with a front and a rear carriage (43a, 43b) which are provided with an entrainer (35) for engagement into the U-shaped cut-out, and wherein the entrainers (35) are designed via a foot part (30) with an adjustable contact force to overcome the sliding friction,
**characterized in that**
the adjustable entrainer (35) with a foot part (30) has a display (34) for visualizing the set contact force.

2. A workpiece carrier (10) for a workpiece conveying device in accordance with claim 1, **characterized in that** the display device (34) for the contact force in the entrainer (35) displays a value for a set path, a set force or a set pressure.

3. A workpiece carrier (10) for a workpiece conveying device in accordance with claim 1 or claim 2, **characterized in that** the adjustment device (38) for setting the contact force for the entrainer (35) is equipped with a protective cover (37) which prevents an unintentional adjustment of the contact force and protects the adjustment device (38) from damage.

4. A workpiece carrier (10) for a workpiece conveying device in accordance with claims 1 to 3, **characterized in that** the adjustment device (38) for setting the contact force for the entrainer (35) is equipped with a protective cover (37); and **in that** a blockage apparatus and/or clamping apparatus which prevents an unwanted adjustment of the contact force is integrated into the protective cover (37).

5. A workpiece carrier (10) for a workpiece conveying device in accordance with claim 3 or 4, **characterized in that** the adjustment device (38) for setting the contact force for the entrainer (35) is equipped with a protective cover (37) and with a quick-change unit which allows a tool-free removal, displacement, rotation or tilting of the protective device such that the adjustment device (38) can be set to a new value in a time-saving manner.

6. A workpiece carrier (10) for a workpiece conveying device in accordance with one of the preceding claims, **characterized in that** the workpiece carriers (10) are equipped with a workpiece carrier identification device (18) with which the carriers (10) are unambiguously identifiable, whereby it is possible that workpiece carriers (10) having different workpiece types and differing entrainer contact forces can be conveyed together on a workpiece conveying device.

7. A method for adjusting a plurality of workpiece carriers (10) in accordance with one of the preceding claims for a workpiece conveying device, **characterized in that** the contact force determined on a workpiece carrier (10) can be simply transferred to the other workpiece carriers (10) **in that** the value read off from the display (34) is also set on the other workpiece carriers,
or the contact force can be set simply **in that** the adjustment device (38) is actuated for so long until the value of the display (34) corresponds to a predefined value, or
the set contact force can be checked simply by a visual inspection of the display (34) as to its correctness, or
the contact force can be set simply on a wear-induced reduction of the friction take-along force **in that** the adjustment device (38) is corrected by a predefined value for all workpiece carriers (10).

8. A workpiece conveying device having at least one workpiece carrier in accordance with one of the preceding claims, **characterized in that** workpiece carriers (10) can be used on a workpiece conveying device with a differently set contact force for conveying different workpiece types.

## Revendications

1. Porte-pièce (10) pour un dispositif de transport de pièces destiné à transporter des pièces en particulier lourdes, comprenant une chaîne transporteuse destinée à transporter les porte-pièces par transmission des efforts de friction et comprenant un rail de guidage destiné à guider et soutenir la chaîne transporteuse et les porte-pièces, la chaîne transporteuse s'étendant dans un rail de guidage en forme de U, des surfaces d'appui, sur lesquelles les porte-pièces s'appuient au moyen de galets de guidage, s'étendant à côté du rail de guidage en forme de U, les porte-pièces (10) étant équipés d'un chariot avant et d'un chariot arrière (43a, 43b), qui sont pourvus d'un élément d'entraînement (35) destiné à venir en prise dans le creux en forme de U, et les éléments d'entraînement (35) étant réalisés avec une force de pression réglable par le biais d'une partie pied (30) pour surmonter le frottement par glissement,
**caractérisé en ce que**
l'élément d'entraînement (35) réglable doté d'une partie pied (30) dispose d'un élément d'indication (34) pour visualiser la force de pression réglée.

2. Porte-pièce (10) pour un dispositif de transport de pièces selon la revendication 1, **caractérisé en ce que** le dispositif d'indication (34) pour la force de pression dans l'élément d'entraînement (35) indique une valeur pour une course réglée, une force réglée ou une pression réglée.

3. Porte-pièce (10) pour un dispositif de transport de pièces selon la revendication 1 ou 2, **caractérisé en ce que** le dispositif de réglage (38), destiné à régler la force de pression pour l'élément d'entraînement (35), est équipé d'un couvercle de protection (37), qui empêche une modification involontaire de la force de pression et qui protège le dispositif de réglage (38) des endommagements.

4. Porte-pièce (10) pour un dispositif de transport de pièces selon les revendications 1 à 3, **caractérisé en ce que** le dispositif de réglage (38), destiné à régler la force de pression pour l'élément d'entraînement (35), est équipé d'un couvercle de protection (37) et **en ce qu'**un dispositif de blocage et/ou de serrage, qui empêche une modification involontaire de la force de pression, est intégré dans le couvercle de protection (37).

5. Porte-pièce (10) pour un dispositif de transport de pièces selon la revendication 3 ou 4, **caractérisé en ce que** le dispositif de réglage (38), destiné à régler la force de pression pour l'élément d'entraînement (35), est équipé d'un couvercle de protection (37) et d'un dispositif de changement rapide, qui permet un retrait, un déplacement, une rotation ou un basculement sans outil du dispositif de protection, de telle sorte que le dispositif de réglage (38) peut être réglé sur une nouvelle valeur en gagnant du temps.

6. Porte-pièce (10) pour un dispositif de transport de pièces selon l'une des revendications précédentes, **caractérisé en ce que** les porte-pièces (10) sont équipés d'un dispositif d'identification de porte-pièce (18), au moyen duquel les porte-pièces (10) sont identifiables sans ambiguïté, ce qui permet de transporter ensemble des porte-pièces (10) avec différents types de pièces et différentes force de pression d'élément d'entraînement sur un dispositif de transport de pièces.

7. Procédé de réglage d'une pluralité de porte-pièces (10) selon l'une des revendications précédentes pour un dispositif de transport de pièces, **caractérisé en ce que** : la force de pression déterminée sur un porte-pièce (10) peut être transmise facilement aux autres porte-pièces (10), en réglant la valeur lue par le dispositif d'indication (34) également sur les autres porte-pièces, ou la force de pression peut être réglée simplement en actionnant le dispositif de réglage (38) jusqu'à ce que la valeur du dispositif d'indication (34) corresponde à une valeur prédéfinie, ou l'exactitude de la force de pression réglée peut être vérifiée simplement par un contrôle visuel du dispositif d'indication (34), ou en cas de réduction de la force d'entraînement par frottement liée à l'usure, la force de pression peut être réglée simplement en corrigeant d'une valeur prédéfinie le dispositif de réglage (38) pour tous les porte-pièces (10).

8. Dispositif de transport de pièce comprenant au moins un porte-pièce selon l'une des revendications précédentes, **caractérisé en ce que** des porte-pièces (10) avec une force de pression réglée différemment peuvent être utilisés pour le transport de différents types de pièces sur un dispositif de transport de pièces.
